# EUROPÄISCHE PATENTANMELDUNG

(11) **EP 3 118 054 A1**
(43) Veröffentlichungstag der Anmeldung: **18.01.2017**
(21) Anmeldenummer: 16179752.7
(22) Anmeldetag: 15.07.2016
(51) Int. Cl.: B60M 1/20, B60M 1/30

(54) **STROMSCHIENENAUFHÄNGUNG AN BALKEN**

(30) Priorität: 16.07.2015 DE 102015111592
(71) Anmelder: Furrer + Frey AG, 3000 Bern 6 (CH)
(72) Erfinder: Furrer, Beat, 3012 Bern (CH); Müller, Bernhard, 3604 Thun (CH)
(74) Vertreter: von Bülow & Tamada

(57) **Zusammenfassung**

Die Erfindung betrifft eine Vorrichtung (16) zum Halten eines Fahrdrahtes (74) an einer wenigstens zwei Tragwerke (8) miteinander verbindenden Anbindungsvorrichtung (14), umfassend
- einen Haken (32) mit einem Grundkörper (58) an dem ein an die Anbindungsvorrichtung (14) in einer Einhängerichtung (34) einhängbares Hakenelement (60) und ein in Einhängerichtung (34) gesehen unterhalb des Hakens (32) angeordnetes Verbindungselement (62) angeordnet sind, und
- ein sich winklig zur Einhängerichtung (34) und zwischen zwei Endpunkten erstreckender Tragarm (36) zum Tragen des Fahrdrahtes (74),
- wobei der Tragarm (36) am Verbindungselement (62) des Haken (32) zwischen den Endpunkten befestigt ist.

## Beschreibung

Die vorliegende Erfindung betrifft eine Vorrichtung zum Halten eines Fahrdrahtes an einer wenigstens zwei Tragwerke miteinander verbindenden Anschlussvorrichtung.

Aus der EP 2 072 322 A1 ist bekannt, dass ein Abstand zwischen zwei Tragwerken, die eine Stromschiene und einen darin eingespannten Fahrdraht halten, nicht beliebig groß gewählt werden darf, damit ein maximaler Profildurchhang nicht überschritten wird. Hierzu schlägt die EP 2 072 322 A1 vor, jedes Tragwerk mit zwei Masten und einem die beiden Masten verbindenden Joch auszuführen. Die Stromschiene wird dann unterhalb des Joches getragen und mit Tragseilen auf die Stromschiene bezogenen in einem Höhenwinkel und Horizontalwinkel an den Masten nach Art einer Schrägseilbrücke verspannt. Auf diese Weise kann der Profildurchhang reduziert und der Abstand der einzelnen Tragwerke erhöht werden.

Die Konstruktion der EP 2 072 322 A1 ließe sich jedoch nicht an einem Tragwerk realisieren, an dem die Stromschiene über einen Ausleger an einem einzigen Mast gehalten wird, weil dann das verspannte Tragseil die Stromschiene in Richtung des einzigen Masts ziehen würde. Die Verspannung eines Tragseil in dem oben genannten Horizontalwinkel bringt zwangsläufig ein statisches Ungleichgewicht in die Gesamtkonstruktion ein, das durch ein symmetrisch zur Stromschiene geführtes Tragseil ausgeglichen werden muss. Das ist in einem Tragwerk mit einem Mast und einem Ausleger nicht möglich. Unabhängig davon ist zwar durch die Verspannung der Stromschiene an den Masten über die Tragseile der Abstand der Tragwerke untereinander mit einem vertretbaren Profildurchhang grundsätzlich vergrößerbar, die tragende Wirkung der Tragseile und damit die den Profildurchhang aufhebende Wirkung wird jedoch immer kleiner, je spitzer der Höhenwinkel der Tragseile ist, wobei der Höhenwinkel verständlicherweise mit steigendem Abstand der Tragwerke immer spitzer wird. Eine deutliche Steigerung des Abstands der Tragwerke bedingt daher einen konstruktiven Aufwand, der wiederum die montagemechanische Komplexität des Gesamtkonstruktes erhöht und die Materialwahl für die Stromschiene einschränkt, damit diese nicht aufgrund der Zugkräfte durch die Spannseile beschädigt wird. Eine montagemechanische Grundkomplexität ist ohnehin in jedem Fall vorhanden, weil die Tragseile über Spannschlösser verspannt werden müssen.

Die DE 196 26 346 A1 offenbart eine Vorrichtung gemäß dem Oberbegriff des Anspruchs 1.

Es ist Aufgabe der Erfindung, die Aufhängung einer Stromschiene an einem Tragwerk mit einem Mast und einem Ausleger zu ermöglichen und dennoch eine weitere Steigerung des Abstands zwischen den Tragwerken bei einer gleichzeitig möglichst einfachen Gesamtkonstruktion zu erreichen.

Gemäß einem Aspekt der Erfindung umfasst eine Vorrichtung zum Halten eines in einer Stromschiene gehaltenen Fahrdrahtes an einer wenigstens zwei Tragwerke miteinander verbindenden Anbindungsvorrichtung einen Haken mit einem Grundkörper an dem ein an die Anbindungsvorrichtung in einer Einhängerichtung einhängbares Hakenelement und ein in Einhängerichtung gesehen unterhalb des Hakens angeordnetes Verbindungselement angeordnet sind und einen sich winklig zur Einhängerichtung und zwischen zwei Endpunkten erstreckenden Tragarm zum Tragen des Fahrdrahtes, wobei der Tragarm am Verbindungselement des Haken zwischen seinen Endpunkten befestigt ist.

Der angegebenen Vorrichtung liegt die Überlegung zugrunde, dass die einzelnen Tragwerke mit balkenförmigen Anbindungsvorrichtungen verbunden werden könnten, die gegenüber stab- und/oder seilförmigen Elementen auch Kräfte winklig zur Längsrichtung aufnehmen können, wie beispielsweise Biegekräfte. Die balkenförmigen Anbindungsvorrichtungen besitzen daher einen sehr geringen Profildurchhang. An den balkenförmigen Anbindungsvorrichtungen kann dann der Fahrdraht in Abständen befestigt werden, die kürzer sind, als die Abstände der Tragwerke. Auf diese Weise könnte der Abstand der einzelnen Tragwerke deutlich gesteigert werden.

Um Fertigung, Transport und Montage der balkenförmigen Anbindungsvorrichtungen möglichst einfach zu gestalten, sollten diese gerade ausgeführt werden. Dies hat jedoch gerade in Kurven den Nachteil, dass dann auch der Fahrdraht gerade geführt werden würde. Hier greift die angegebene Vorrichtung zum Halten des Fahrdrahtes mit dem Vorschlag an, den Fahrdraht über einen Tragarm aufzuhängen, der sich quer zur Einhängerichtung erstreckt. Mit dem Tragarm kann ein Abstand vom Aufhängepunkt variiert und so der Fahrdraht an die Form von Kurven angepasst werden.

In einer Weiterbildung der angegebenen Vorrichtung ist der Tragarm am Verbindungselement linear verschieblich gehalten. Auf diese Weise kann der Tragarm standardisiert gefertigt werden, wobei die Anpassung an die Kurvenform erst bei der Montage erfolgen kann.

In einer besonderen Weiterbildung umfasst die angegebene Vorrichtung ein Fixierelement, zum Fixieren des linear verschieblichen Tragarms. Auf diese Weise kann die über den linear verschieblichen Tragarm gebildete Kurvenform für Fahrdraht fixiert und dauerhaft gefestigt werden.

In einer anderen Weiterbildung der angegebenen Vorrichtung umfasst der Grundkörper des Hakens ein Blechteil. Das Blechteil kann nicht nur kostengünstig gefertigt sondern auch besonders platzsparend transportiert werden. Zudem lässt es sich der Grundkörper auf diese Weise sehr stabil aber dennoch mit einem geringen Gewicht fertigen. Zur Fertigung des Blechteils kann jedes beliebige Schneidverfahren, wie Stanzen, Fräßen oder Laserschneiden zum Einsatz kommen.

In einer zusätzlichen Weiterbildung der angegebenen Vorrichtung umfasst der Grundkörper wenigstens ein zum Blechteil kongruentes weiteres Blechteil, das zum Blechteil planparallel und das Blechteil übeckend angeordnet ist. Auf diese Weise kann die Stabilität des Grundkörpers weiter erhöht werden.

In einer besonders bevorzugten Weiterbildung der angegebenen Vorrichtung ist der Tragarm zwischen den beiden Blechteilen gehalten. Dabei kann das oben genannte Fixierelement kraftschlüssig, insbesondere in Form einer Schraubverbindung wirken. Auf diese Weise stellt das oben genannte Fixierelement nicht nur die lineare Lage des verschieblich gelagerten Armes sicher sondern hält gleichzeitig auch die beiden Blechteile des Grundkörpers zusammen. In einer noch anderen Weiterbildung der angegebenen Vorrichtung umfasst der Haken ein weiteres Hakenelement, das in Einhängerichtung gesehen beabstandet vom Hakenelement angeordnet ist. Das weitere Hakenelement erhöht die Stabilität der angegebenen Vorrichtung an der balkenförmigen Anschlussvorrichtung und vermeidet so, dass die angegebene Vorrichtung an der balkenförmigen Anschlussvorrichtung in Schwingungen der dergleichen geraten kann.

In einer weiteren Weiterbildung umfasst die angegebene Vorrichtung eine in die Einhängerichtung wirkende Fangrampe, die in eine der Hakenelemente führt. Mit der Fangrampe kann die angegebene Vorrichtung bei der Montage an die balkenförmige Anschlussvorrichtung in einfacher Weise angelegt und richtig positioniert werden, was zur Erleichterung der Montage beiträgt.

In einer noch weiteren Weiterbildung umfasst die angegebene Vorrichtung eine Hakenmaulsicherung zum Verschließen einer Öffnung des Hakens in der Einhängerichtung. Auf diese Weise kann verhindert werden, dass sich die an die balkenförmige Anschlussvorrichtung angehängte angegebene Vorrichtung löst, wenn beispielsweise durch ein den Fahrdraht nutzendes Schienenfahrzeug den Fahrdraht und damit die angegebene Vorrichtung entgegen der Einhängerichtung drückt.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 eine Draufsicht auf eine Fahrstrecke,
Fig. 2 eine Schnittansicht der Fahrstrecke der Fig. 1 entlang der Schnittlinie A-A,
Fig. 3 eine Vorderansicht einer an die Anbindungsvorrichtung angehängten Haltevorrichtung zum Halten eines Fahrdrahtes gemäß einem ersten Ausführungsbeispiel,
Fig. 4 eine Draufsicht auf die Fahrstrecke der Fig. 1 in einer Kurve,
Fig. 5 eine Schnittansicht der Fahrstrecke der Fig. 4 entlang der Schnittlinie B-B,
Fig. 6 eine perspektivische Teilansicht der Haltevorrichtung aus Fig. 3,
Fig. 7a bis 7d schematische Ansichten, die die Montage der Haltevorrichtung an der Anbindungsvorrichtung zeigen,
Fig. 8 eine Vorderansicht einer an die Anbindungsvorrichtung angehängten Haltevorrichtung zum Halten eines Fahrdrahtes gemäß einem ersten Ausführungsbeispiel,
Fig. 9 eine perspektivische Ansicht der Fig. 8, und
Fig. 10 eine perspektivische Ansicht der Anbindungsvorrichtung aus Fig. 8 und 9.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

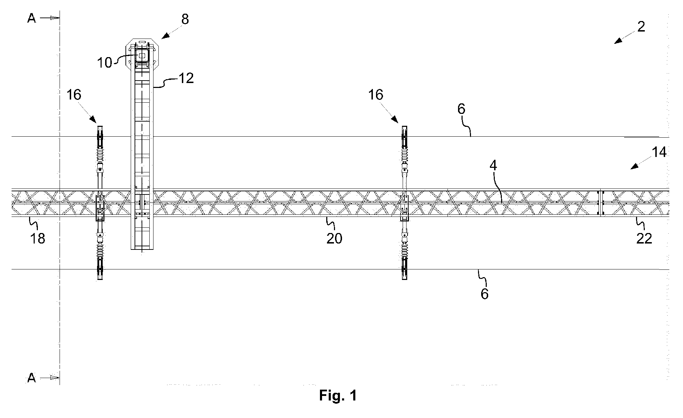

Es wird auf Fig. 1 genommen, die eine Fahrstrecke 2 zeigt, auf dem sich ein nicht weiter dargestelltes Fahrzeug entlang einer Fahrstrecke 4 bewegen kann, die mit einer Linie angedeutet ist. Das Fahrzeug wird über eine Fahrleitung 6 mit elektrischer Energie zu seinem Antrieb auf dem Schienensystem 4 versorgt.

Die Fahrstrecke 2 umfasst in an sich bekannter Weise Tragwerke 8, von denen in Fig. 1 nur eines zu sehen ist. Die einzelnen Tragwerke 8 sind in einem nicht weiter referenzierten Abstand zueinander angeordnet. In der vorliegenden Ausführung umfassen die einzelnen Tragwerke 8 je einen Mast 10 und einen vom Mast 10 abragenden Einhängeausleger 12. Jeder Mast 10 trägt einen Einhängeausleger 12, während die einzelnen Einhängeausleger 12 wiederum die Fahrstrecke 4 überragen. Die einzelnen Einhängeausleger 12 halten die Fahrleitung 6 zum Fahrzeug gerichtet, damit das Fahrzeug auf der Fahrstrecke 4 die elektrische Energie aus der Fahrleitung 6 in an sich bekannter Weise abgreifen kann.

Zur Befestigung der Fahrleitung 6 an den Einhängeauslegern 12 sind eine Anbindungsvorrichtung 14 und mehrere Haltevorrichtungen 16 vorgesehen.

Die Anbindungsvorrichtung 14 umfasst hierbei eine Vielzahl von Balken, von denen in Fig. 1 ein erster Balken 18, ein zweiter Balken 20 und ein dritter Balken 22 zu sehen sind. Die einzelnen Balken 18, 20, 22 sind stirnseitig miteinander verbunden und von den einzelnen Einhängeauslegern 12 getragen. Die Haltevorrichtungen 16 wiederum sind an verschiedenen Stellen an der Anbindungsvorrichtung 14 getragen, wobei der Fahrdraht 6 an den Haltevorrichtungen 16 getragen ist.

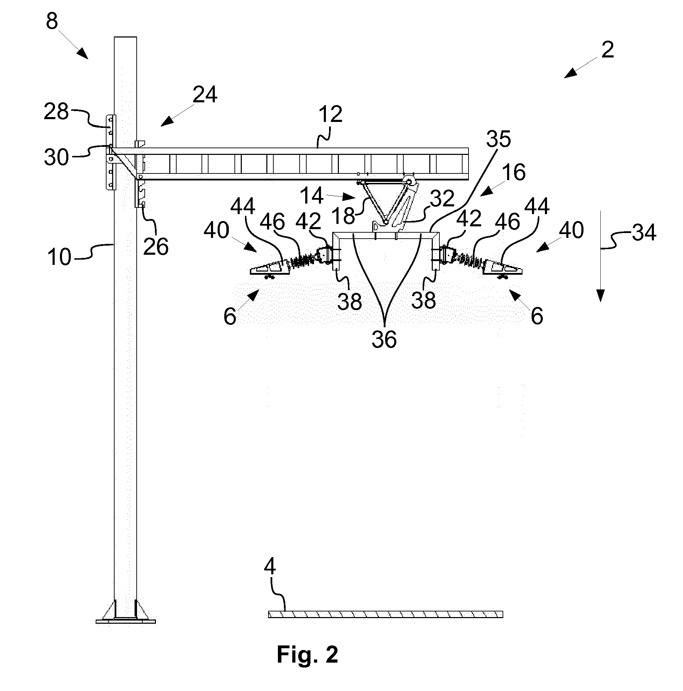

Nachstehend soll die Fahrstrecke 2 anhand einer in Fig. 2 dargestellten Schnittansicht entlang der in Fig. 1 gezeigten Linie A-A erläutert werden.

Wie in Fig. 2 zu sehen, ist der Einhängeausleger 12 ist am Mast 10 des Tragwerkes 8 über ein Fanghakenlager 24 gehalten. Das Fanghakenlager 24 umfasst Fanghakenleisten 26, in die der Einhängeausleger 12 eingehängt ist, sowie ein Stiftlager 28, in das zur Gegenlagerung des Einhängeauslegers 12 ein Haltestift 30 eingeschoben ist. Der Einhängeausleger 12 kann auf der Fanghakenleiste 26 in verschiedenen Höhen eingehängt und mit dem Haltestift 30 am Stiftlager 28 gegen ein Herunterklappen gesichert werden. Auf weitere Ausführungen zum Fanghakenlager 24 soll nachstehend verzichtet werden.

Die Haltevorrichtungen 16, von denen in Fig. 2 die am in Fig. 1 gezeigten ersten Balken 18 eingehängte Haltevorrichtung 16 zu sehen ist, umfassen je einen Haken 32, der in einer Einhängerichtung 34 an den jeweiligen Balken 18, 20, 22 eingehängt ist. An der in der Einhängerichtung 34 gesehenen Unterseite des Hakens 32 ist ein Joch 35 befestigt. Das Joch 35 besitzt zwei Tragearme 36, die sich rechtwinklig zur Einhängerichtung 34 erstreckende und voneinander weggerichtetet sind. Das Joch 35 besitzt ferner zwei Tragestangen 38. An jedem freien Enden der Tragearme 36 ist dabei je eine Tragestange 38 angeordnet und ragt in die Einhängerichtung 34 ab. An jeder Tragestangen 38 ist ein Schwenkausleger 40 mit je einem Schwenkgelenk 42 und einem Haltefuß 44 gehalten, die über einen Isolator 46 getrennt sind.

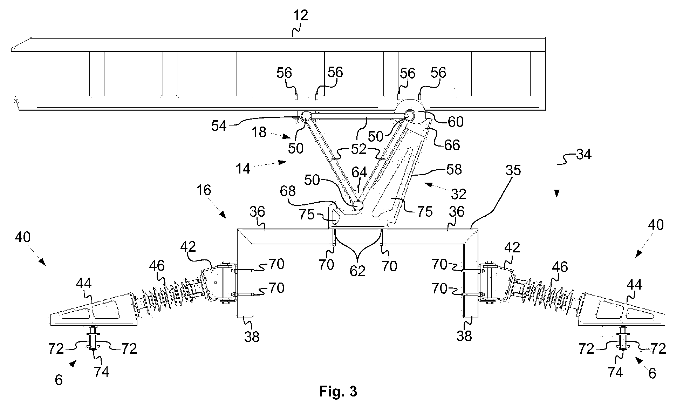

Nachstehend werden die Anbindungsvorrichtung 14 und die Haltevorrichtungen 16 anhand der Fig. 3 weiter im Detail beschrieben.

Die Balken 18, 20, 22 der Anbindungsvorrichtung 14, von denen auch in Fig. 3 nur der erste Balken 18 zu sehen ist, sind als Fachwerkbalken ausgeführt. Die einzelnen Balken umfassen Längsstäbe 50, die im Profil des jeweiligen Balken 18, 20, 22 zu einem gleichseitigen Dreieck angeordnet sind. Die einzelnen Längsstäbe 50 sind über eine Vielzahl von Querstäben 52 miteinander zu einem Fachwerk verbunden.

Die Längsstäbe 50, die in Einhängerichtung 34 gesehenen an der Oberseite der einzelnen Balken 18, 20, 22 angeordnet sind, sind an den einzelnen Einhängeauslegern 12 aufgehängt. Hierzu sind in der Einhängerichtung 34 gesehen unterhalb der Längsstäbe 50 Halbschellen 54 angeordnet, auf die die einzelnen Längsstäbe 50 aufgelegt sind. An die Halbschellen 54 sind Schraubhaken 56 angeschraubt, die wiederum an den Einhängeausleger 12 in der Einhängerichtung 34 eingehängt sind. Auf diese Weise werden die einzelnen Balken 18, 20, 22 an den Einhängeauslegern 34 gehalten.

Die Haken 32 der einzelnen Haltevorrichtungen 16 umfassen einen

Grundkörper 58 mit einem ersten Hakenelement 60, das in Einhängerichtung 34 gesehen am oberen Ende des Grundkörpers 58 angeordnet ist, einem Verbindungselement 62, das in Einhängerichtung 34 gesehen am unteren Ende des Grundkörpers 58 angeordnet ist und einem zweiten Hakenelement 64, das zwischen dem ersten Hakenelement 60 und dem Verbindungselement 62 angeordnet ist.

Der Haken 32 ist an einem der Balken 18, 20, 22 der Anschlussvorrichtung 14 befestigt, in dem das erste Hakenelement 60 an einem der beiden in Einhängerichtung 34 gesehenen oberen Längsstäbe 50 eingehängt ist, während das zweite Hakenelement 64 am in Einhängerichtung 34 gesehenen unteren Längsstab 50 eingehängt ist.

Damit sich der Haken 32 nicht von dem entsprechenden Balken 18, 20, 22 der Anschlussvorrichtung 14 löst, ist an dem ersten Hakenelement 60 eine Hakenmaulsicherung 66 angeordnet, die eine Öffnung des ersten Hakenelementes 60 entgegen der Einhängevorrichtung 34 verschließt. Diese Hakenmaulsicherung 66 kann optional zusätzlich oder alternativ auch am zweiten Hakenelement 64 angeordnet sein.

Ferner ist am zweiten Hakenelement 64 eine Fangrampe 68 angeordnet, die das zweite Hakenelement 64 entgegen der Einhängerichtung 34 öffnet und somit den in Einhängerichtung 34 gesehenen unteren Längsstab 50 fängt, wenn der Haken 32 von unten entgegen der Einhängerichtung 34 gegen den entsprechenden Balken 18, 20, 22 der Anschlussvorrichtung 14 bewegt wird.

Das Verbindungselement 62 umfasst nicht weiter zu sehende Bohrungen an denen in einer noch zu beschreibenden Weise Befestigungsbügel 70 gehalten sind. In den Befestigungsbügeln 70 sind die Tragearme 36 des Joches 35 linear verschieblich gelagert, so dass das Joch 35 rechtwinklig zur Einhängerichtung 34 hin- und hergeschoben werden kann.

Ebenfalls über Befestigungsbügel 70 sind an den Tragestangen 38 des Jochs die Schwenkausleger 40 gehalten, worauf ebenfalls an späterer Stelle detaillierter eingegangen wird.

An der in Einhängerichtung 34 gesehenen Unterseite der Haltefüße 44 sind die Fahrleitungen 6 in Form von Stromschienen gehalten. Hierzu weist jede Fahrleitung 6 zwei an den Haltefüßen 44 befestigte Klemmarme 72 auf, in denen ein Fahrdraht 74 eingeklemmt ist.

Zur Gewichtserleichterung des Hakens 32 können in diesen Ausnehmungen 75 eingeformt sein.

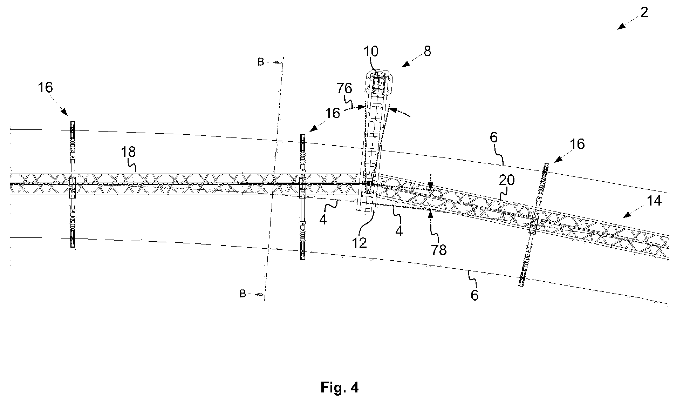

Die zuvor genannte linear verschiebliche Lagerung des Joches 35 mit den Tragearmen 36 über die Klemmbügel 70 wird nachstehend anhand der Fig. 4 näher beschrieben, in der die Fahrstrecke 2 in einer Kurve dargestellt ist.

In Fig. 4 sind von der Anschlussvorrichtung 14 nur ein erster Balken 18 und ein zweiter Balken 20 zu sehen, die der Übersichtlichkeit halber mit den gleichen Bezugszeichen versehen sind, wie in Fig. 1. Die beiden geraden Balken 18, 20 sind in der Kurve stirnseitig über einen Winkel 76 verbunden, um die Anschlussvorrichtung 14 dem Kurvenverlauf der Fahrstrecke 4 nachzuführen. Auf diese Weise ist die Anschlussvorrichtung 14 dem Kurvenverlauf der Fahrstrecke 4 polygonartig angenähert. Durch den polygonartigen Verlauf der Anschlussvorrichtung 14 in der Kurve entfernt sich die Anschlussvorrichtung 14 in der Kurve von der Fahrstrecke 4 sinusförmig über den Fahrweg des Fahrzeuges mit einer Amplitude 78, beziehungsweise nähert sich diesem an. Mit dieser Amplitude 78 würde sich auch die Fahrleitung 6 sinusförmig über den Fahrweg 4 entfernen beziehungsweise annähern, wenn diese stets an den Balken 18, 20, 22 der Anschlussvorrichtung 14 in einer gleichen Lage aufgehängt werden würde. Dabei könnte es passieren, dass sich die Fahrleitung 6 soweit vom Fahrweg 4 entfernt, dass der Stromabnehmer des Fahrzeuges den Kontakt mit der Fahrleitung 6 verliert.

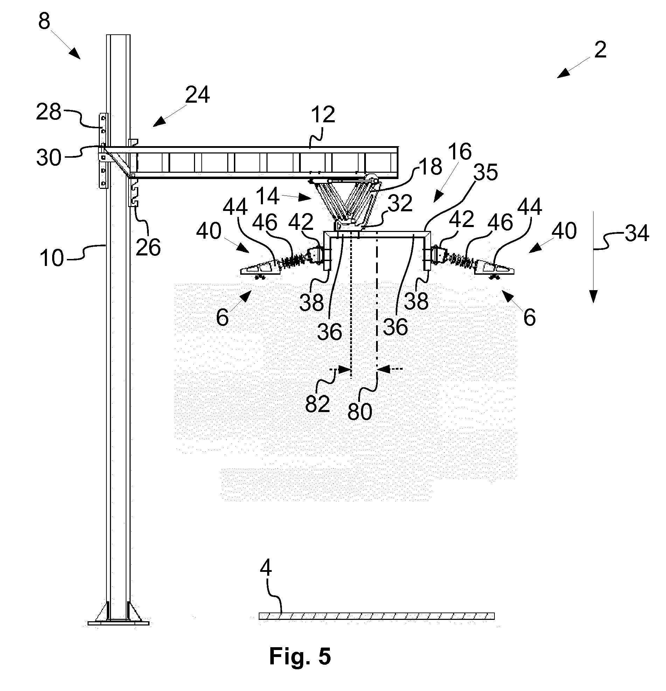

Um dies zu vermeiden, sind wie in Fig. 5 gezeigt, die Joche 36 und damit die Tragearme 36 linear verschieblich in den Befestigungsbügeln 70 gehalten. Auf diese Weise kann der Verlauf der Fahrleitung 6 genauer (das heißt mit einer geringeren Amplitude 78) an den Verlauf der Fahrstrecke 4 angepasst werden, als der Verlauf der polygonartig verlaufenden Anschlussvorrichtung 14. Je nach Anforderungen an die Genauigkeit des Kurvenverlaufs der Fahrleitung 6, können in der Kurve an einem Balken 18, 20, 22 der Anschlussvorrichtung 14 mehrere Hängevorrichtungen 16 in sehr kurzen Abständen zueinander aufgehängt werden. Auf diese Weise werden die geradlinigen Polygonzüge der Fahrleitung 6 verkürzt.

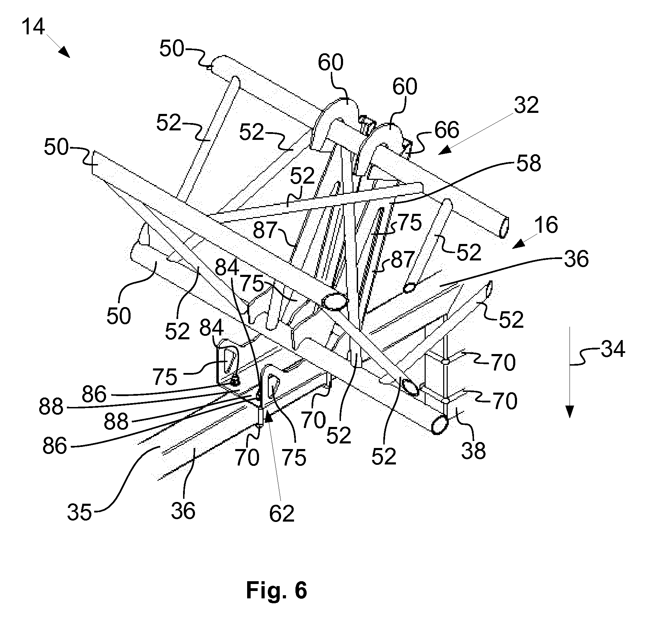

Hierzu wird das Joch mit den beiden Tragearmen 36 ausgehend von einer Symmetrieachse 80 des Joches 35 gesehen um einen linearen Verschiebeweg 82 verschoben am in Fig. 3 angedeuteten Verbindungselement 62 gelagert. In diesem Zustand wird das Joch 35 dann über die Befestigungsbügel 70 am Verbindungselement 62 befestigt, was nachstehend anhand der Fig. 6 näher erläutert werden soll, die eine perspektivische Ansicht der Anschlussvorrichtung 14 und der Haltevorrichtung 16 zeigt.

Hierzu sind die einzelnen Befestigungsbügel 70 an ihren Enden mit Gewinden 84 ausgeführt, was in Fig. 6 nur an einem der Befestigungsbügel 70 mit Bezugszeichen angedeutet ist. Wenn die Enden der Befestigungsbügel 70 durch die in Fig. 6 nicht zu sehenden Bohrungen des Verbindungselementes 62 am Haken 32 durchgeführt sind, wird auf die Gewinde 84 jeweils eine Mutter 86 aufgeschraubt und festgezogen. Auf diese Weise werden die Tragarme 36 des Joches 35 zwischen den Befestigungsbügeln 70 und dem Grundkörper 58 des Hakens 32 fixiert. In gleicher Weise können auch die Schwenkarme 40 an den Tragarmen 38 des Joches 35 befestigt werden.

Der Grundkörper 58 ist in Fig. 6 aus Blechteilen 87 ausgeführt, die an der in Einhängerichtung 34 gesehenen Unterseite des Hakens 32 rechtwinklig zur Einhängerichtung 34 abgebogene Enden 88 aufweisen. Die Blechteile 87 können auch einstückig oder mehrstückig ausgeführt sein, wobei an jedem Haken 32 die einzelnen Enden 88 spiegelsymmetrisch aufeinander zu gerichtet sind.

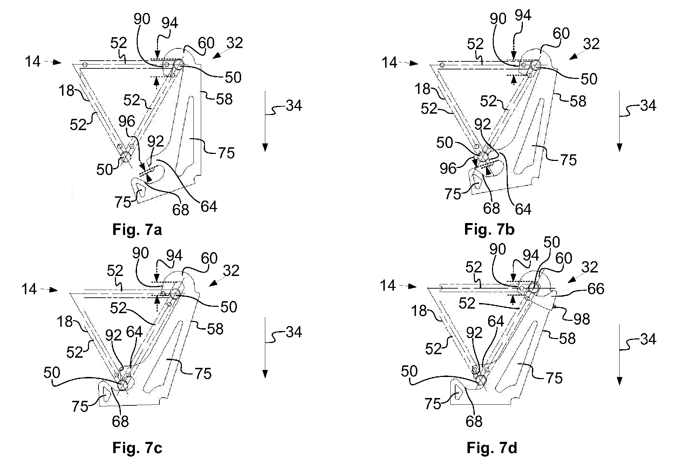

Abschließend soll das Einhängen des Hakens 32 der Haltevorrichtung 16 an einen der Balken 18, 20, 22 der Anschlussvorrichtung 14 anhand der Fig. 7a bis 7d im Detail erläutert werden.

Das erste Hakenelement 60 und das zweite Hakenelement 64 umfassen entsprechend eine erste Hakennase 90 und eine zweite Hakennase 92 über die der Hakenformschluss hergestellt und die Aufhängung ermöglicht wird. Die erste Hakennase 90 weist eine erste Hakennasenlänge 94 auf, die größer ist, als eine zweite Hakennasenlänge 96 der zweiten Hakennase 92. Die zweite Hakennasenlänge 96 ist dabei in Fig. 7c und 7d der Übersichtlichkeit halber nicht mit einem Referenzzeichen versehen.

Zunächst wird der Haken 32 mit dem ersten Hakenelement 60, wie in Fig. 7a gezeigt, an einem der in Einhängerichtung 34 gesehenen oberen Längsstäbe 50 derart eingehängt, dass das zweite Hakennase 29 zum in Einhängerichtung 34 gesehenen unteren Längsstab 50 hin gerichtet ist.

Anschließend wird, wie in Fig. 7b gezeigt, das zweite Hakenelement 64 mit der zweiten Hakennase 92 durch Schwenken des Hakens 32 um den Längsstab 50, an dem das erste Hakenelement 60 aufgehängt ist, gegen den in Einhängerichtung 34 gesehenen unteren Längsstab 50 bewegt. Diese Drehung ist solange möglich, bis die zweite Hakennase 92 gegen den in Einhängerichtung 34 gesehenen unteren Längsstab 50 schlägt.

Im Anschluss wird der Haken 32, wie in Fig. 7c zu sehen ist, entgegen der Einhängerichtung 34 angehoben. Hierbei fängt die Fangrampe 68 den in Einhängerichtung 34 gesehenen unteren Längsstab 50. Weil die erste Hakennase 90 länger ist, als die zweite Hakennase 92 löst sich dabei jedoch nicht die Hakenverbindung zwischen dem ersten Hakenelement 60 und dem entsprechenden oberen Längsstab 50.

In dem Zustand, in dem der in Einhängerichtung 34 gesehene untere Längsstab 50 über die Fangrampe 68 gefangen ist, wird der Haken 32 nun weiter winklig zur Einhängerichtung 34 gedreht, so dass dieser Längsstab 50 in das zweite Hakenelement 64 eingeführt wird. Abschließend wird der Haken 32 in der Einhängerichtung 34 bewegt und die Einhängung des Hakens 32 an der Anschlussvorrichtung 14, wie in Fig. 7d gezeigt, abgeschlossen.

Zur oben genannten Sicherung des Hakens 32 an der Anschlussvorrichtung 14 kann nun noch die Hakenmaulsicherung 66 beispielsweise mit einer Schraube 98 am Haken befestigt werden.

An den Haken 32 im in Fig. 7d gezeigten Zustand kann nun das Joch 35 in der oben erläuterten Weise befestigt werden. Alternativ kann das Joch 35 bereits vor dem Einhängen des Hakens 32 an der Anschlussvorrichtung 14 an diesem befestigt werden.

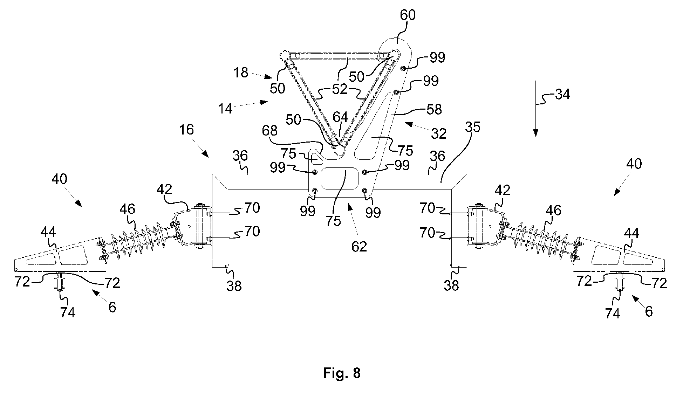

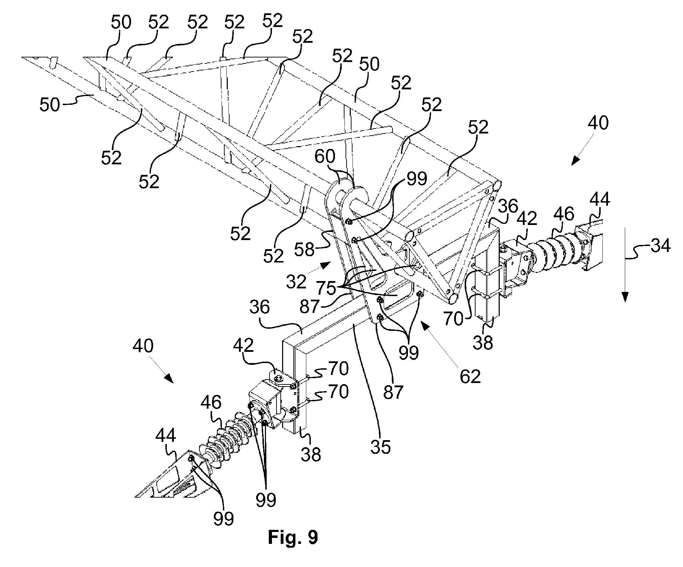

Nachstehend wird ein alternatives Ausführungsbeispiel für den Haken 32 anhand der Fig. 8 bis 10 beschrieben.

Der Haken 32 gemäß dem alternativen Ausführungsbeispiel funktioniert in genau der selben Weise wie der bereits beschriebene Haken 35. Er unterscheidet sich lediglich in der Ausführung des Verbindungselementes 62. Hierbei sind die Blechteile 87 im Bereich des Verbindungselementes 62 nicht abgebogen sondern gerade ausgeführt. Das Joch mit den Tragearmen 36 wird zwischen den Blechteilen 87 aufgenommen.

Um das Joch mit den Tragarmen 36 in verschiedenen linearen Lagen (siehe Fig. 4 und 5) zu fixieren, werden die beiden Blechteile 87 über Schraubverbindungen 99 kraftschlüssig miteinander verbunden, so dass das Joch mit den Tragarmen 36 zwischen den beiden Blechteilen 87 eingeklemmt ist.

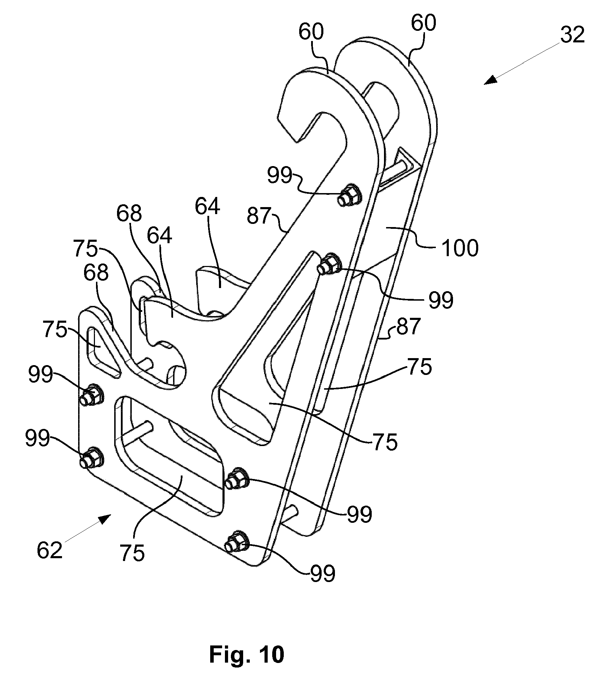

Um die Hakenmaulsicherung 66 analog zur Fig. 7d am Grundkörper mit der Schraube 98 anschrauben zu können, ist ferner noch eine in Fig. 10 gezeigte Befestigungsbrücke 100 zwischen den beiden Blechteilen 87 angeordnet. Auf die Darstellung einer Befestigungsbohrung für die Schraube 98 wurde in Fig. 10 verzichtet.

## Patentansprüche

1. Vorrichtung (16) zum Halten eines in einer Stromschiene gehaltenen Fahrdrahtes (74) an einer wenigstens zwei Tragwerke (8) miteinander verbindenden Anbindungsvorrichtung (14), **gekennzeichnet durch**
- einen Haken (32) mit einem Grundkörper (58) an dem ein an die Anbindungsvorrichtung (14) in einer Einhängerichtung (34) einhängbares Hakenelement (60) und ein in Einhängerichtung (34) gesehen unterhalb des Hakens (32) angeordnetes Verbindungselement (62) angeordnet sind, und
- einen sich winklig zur Einhängerichtung (34) und zwischen zwei Endpunkten erstreckenden Tragarm (36) zum Tragen des Fahrdrahtes (74),
- wobei der Tragarm (36) am Verbindungselement (62) des Haken (32) zwischen seinen Endpunkten befestigt ist.

2. Vorrichtung (16) nach Anspruch 1, wobei der Tragarm (36) am Verbindungselement (62) linear verschieblich gehalten ist.

3. Vorrichtung (16) nach Anspruch 2, umfassend ein Fixierelement (70, 99), zum Fixieren des linear verschieblichen Tragarms (36).

4. Vorrichtung (16) nach Anspruch 3, wobei das Fixierelement (70, 99) kraftschlüssig, insbesondere in Form einer Schraubverbindung (99) wirkt.

5. Vorrichtung (16) nach einem der vorstehenden Ansprüche, wobei der Grundkörper (58) des Hakens ein Blechteil (87) umfasst.

6. Vorrichtung (16) nach Anspruch 5, wobei der Grundkörper (58) wenigstens ein zum Blechteil (87) kongruentes weiteres Blechteil (87) umfasst, das zum Blechteil (87) planparallel und das Blechteil (87) übeckend angeordnet ist.

7. Vorrichtung (16) nach Anspruch 6, wobei der Tragarm (36) zwischen den beiden Blechteilen (87) gehalten ist.

8. Vorrichtung (16) nach einem der vorstehenden Ansprüche, wobei der Haken (32) ein weiteres Hakenelement (64) umfasst, das in Einhängerichtung (34) gesehen beabstandet vom Hakenelement (60) angeordnet ist.

9. Vorrichtung (16) nach einem der vorstehenden Ansprüche, umfassend eine in die Einhängerichtung (34) wirkende Fangrampe (68).

10. Vorrichtung (16) nach einem der vorstehenden Ansprüche, umfassend eine Hakenmaulsicherung (66) zum Verschließen einer Öffnung des Hakens (32) in der Einhängerichtung (34).
